# EUROPEAN PATENT SPECIFICATION

(11) **EP 4 267 276 B1**
(45) Date of publication and mention of the grant of the patent: **22.07.2026**
(21) Application number: 21840630.4
(22) Date of filing: 22.12.2021
(51) Int. Cl.: B01D 46/00, B01D 46/10, B01D 46/12, B01D 46/52

(54) **AIR FILTER WITH INTEGRATED SEALED ACCESS PORT**
LUFTFILTER MIT INTEGRIERTEM ABGEDICHTETEN ZUGANGSPORT
FILTRE À AIR AVEC ORIFICE D'ACCÈS SCELLÉ INTÉGRÉ

(30) Priority: 22.12.2020 SE 2051532
(43) Date of publication of application: 01.11.2023
(73) Proprietor: Camfil AB, 111 34 Stockholm (SE)
(72) Inventor: MARWAHA, Gautam, Laval H7Y 1S8, Québec (CA); HEDLUND, Kenny, 619 33 TROSA (SE); KENADZIR, Vincent Arun, Utama CHEMOR, Perak, 31200 (MY)
(74) Representative: Zacco Sweden AB
(86) International application number: PCT/EP2021/087228
(87) International publication number: WO 2022/136515

(56) References cited:
- DE-A1- 102013 015 630
- DE-A1- 2 618 914
- KR-A- 20190 119 740
- US-A- 4 976 759
- US-A1- 2019 247 779
- US-B1- 10 345 215

## Description

### FIELD OF THE INVENTION

The present invention relates to arrangements for testing the performance of air filters.

### BACKGROUND OF THE INVENTION

Controlled supply of clean air is essential in a variety of applications such as building ventilation systems, and air supply to clean processes or industrial installations. It is desirable to filter the inlet air for the purposes of removing various particles and/or gaseous matter and the like which may be entrained in the air, and thereby provide conditioned inlet air according to specified quality requirements. For this purpose, filter arrangements are provided at the air flow inlet to an application. The filters are arranged so that inlet air generally passes through a series of filters to remove contaminant matter from the air.

Air filters typically comprise one or more filter elements disposed in a casing structure. Examples include, panel filters, deep pleat box filters and V-type filters. A panel filter or a deep pleat box filter typically comprises a pleated filter element arranged in a rectangular or box-like casing. A V-type filter typically includes two or more pairs of pleated filter elements arranged in a V-configuration.

Each of the filter elements may be comprised of a pleated particulate or gas filter element. A filter element is typically formed from a sheet of filter media, e.g. a fiberglass sheet, or a nonwoven polyester sheet or membrane media or combinations thereof or the like, which is pleated to increase the effective filtering area of the filter body. The filter media for particle separation has the specific ability to remove particles of different sizes from the air stream depending on the media type and will by that typically conform to a filtration class from G4 up to H13 according to the standards EN779 or EN 1822 or by equivalent other national or international standards. A filter media for molecular filtration have similarly a specific ability to remove different types of gaseous compounds from the air stream. The media type is selected depending on the gaseous compounds to be removed.

To provide mechanical support and/or to combine a plurality of filter elements, the filter elements are typically arranged in a casing structure. In order to secure the filter elements to the casing structure and prevent air from bypassing the filter elements, the filter elements are typically adhered and sealed against the casing structure by means of an adhesive.

During use, the air filters are typically mounted in a filter holding structure. The filter holding structure may for example comprise a filter housing or filter bank grid, with one or more openings in which the filters are fitted.

As can be appreciated, filters in such arrangements gradually accumulate matter from the air and as this matter accumulates on the filter the resistance to flow of air through the filter increases. Filter arrangements are clogged up by particles trapped in the air filters but also affected by environmental conditions such as fog, rain, snow, and the like. The clogging may reduce filtration and operating efficiency while increasing the overall pressure drop. An increase of the pressure drop over the filter arrangement implies an inlet air pressure loss that may affect operations at a receiving end, e.g., the operation of an industrial installation.

In molecular filters, used for removal of gaseous contaminants, the removal efficiency of the filter will decrease as the adsorbent gradually becomes saturated with the contaminant.

Accordingly, a filter has a technical lifespan during which it functions adequately. The lifespan depends on different factors such as particle concentration in the air, the flow of air etc. The technical lifespan may be determined from measurements performed on the filter air flow, pressure drop, and pollution concentration downstream of the filter.

In many cases, from an economical perspective, it may be advisable to simply replace a filter well before the estimated end of its technical lifespan. In other cases, however, it is important to be able to monitor the performance of a filter in order detect filter leakage or to determine when filter replacement is due.

One application where testing and monitoring of filter performance is of interest is for air intake filters in connection with gas turbine combustion systems employed for power generation. In such applications, high volumes of air are utilized in the combustion process. In turn, high volume air filtration is required to condition intake air streams for combustion optimization and for reducing wear on gas turbine components. In particular, the removal of relatively small particles and liquid is important to minimize degradation of turbine compressor blades leading to loss of compressor efficiency.

Another application where testing and monitoring of filter performance is of interest is in molecular filtration, where measurement of pollution concentration over single filters in serial sequences can be important. Also, in clean room applications the performance or status of panel type HEPA filters by measuring pressure difference and other parameters between filters can be of importance.

Access to reliable data is a key to monitor filter performance. However, installation of testing equipment involves time and cost.

Furthermore, two or more filters are often arranged in series, such as a prefilter coupled directly to the front of a main filter such that air to be filtered is passed first through the prefilter and then through the main filter. **In** such installations it is often desirable to be able to evaluate the performance of the prefilter and the main filter separately, but the cost of installing testing equipment for being able to monitor each individual filter may often not be justified.

Thus, there is a need for improvements relating to the testing of filters and gathering accurate data that may be used for estimating a filter operating state.

Documents DE2618914A1, US2019/247779A1 and US10345215B1 disclose various solutions for filter test systems where a plug can be used to seal an access port. Document KR20190119740A discloses a filter where an opening and closing part can be used to open and close a suction port; document US4976759A discloses a filter system with an opening for plug or valve; and document DE102013015630A1 discloses a an air filter for a ventilation device.

### SUMMARY OF THE INVENTION

One object of the present disclosure is to provide an air filter, which solves or ameliorates at least some of the problems associated with testing or monitoring filter performance.

Another object of the present disclosure is to provide an air filter, which solves or ameliorates at least some of the problems associated with testing or monitoring filter performance in air filter arrangements wherein two or more filters are often arranged in series.

The above objects as well as other objects that will become apparent to the skilled person in the light of the present disclosure are achieved by the various aspects of the invention as set out herein.

According to a first aspect of the disclosure, there is provided an air filter comprising
a filter casing defining an air passage from a first opening to a second opening in the filter casing,
at least one filter element arranged in the air passage of the filter casing, such that air passing between the first opening and the second opening must pass through the at least one filter element,
characterized in that said filter casing is manufactured with at least one sealed access port integrated in the filter casing, wherein said at least one sealed access port can be unsealed to provide an access to the air passage from outside the filter casing, and wherein one or more connection features are integrated in the sealed access port (120) and configured to mate with one or more connection features of a corresponding fitting structure of a testing equipment.

The provision of an access port in the filter casing allows for access to the air passage from outside the filter casing when this would otherwise not be possible, for example when the filter is mounted in a filter holding structure or coupled directly to another filter. The access port allows for testing equipment to be connected to the filter casing in order to test or monitor filter performance. The testing equipment may for example include filter evaluation probe, such as a pressure sensor, a temperature sensor, a moisture sensor, a distributor for introducing a test substance into the air passage, a probe for measuring the concentration of particulate matter in the air passage, a probe for measuring the concentration of a gas or vapor species in the air passage, a probe for measuring the velocity of an air stream in the air passage, a probe for measuring electrostatic charge, or a combination thereof.

The access port of the inventive air filter is manufactured as a sealed access port integrated in the filter casing, which can be unsealed to provide access to the air passage from outside the filter casing. Preferably, the seal is provided by a portion of the casing wall. In other words, the seal is preferably a portion of the casing wall, for example formed in connection with forming of the casing wall itself, e.g. by injection molding. The seal may be provided by a portion of the casing wall, which can be easily removed, preferably without tools and without leaving debris or waste besides the seal itself. The removal is typically irreversible, i.e. the removed portion cannot be easily be reattached to reseal the access port. When the seal is removed the unsealed access port should preferably be suitable for connecting testing equipment to the filter casing.

The inventive sealed access port integrated in the filter casing allows for each individual air filter to be prepared for being equipped with testing equipment, without increasing the overall manufacturing costs of the air filter. If the access port is not needed, it is left sealed. The filter can then be used as normal, without any negative effects in terms of performance, usability, weight or recyclability. If use of the access port is desired, the access port is simply unsealed, and a suitable piece of testing equipment is connected to the unsealed access port.

The air filter comprises a filter casing defining an air passage from a first opening to a second opening in the filter casing. The air filter further comprises at least one filter element arranged in the air passage of the filter casing, such that air passing between the first opening and the second opening must pass through the at least one filter element. In some embodiments, the air filter is a panel filter, a deep pleat box filter, or a V-type filter. The design of these types of air filters is well known to the person skilled in the art. A panel filter or a deep pleat box filter typically comprises a pleated filter element arranged in a rectangular or box-like frame. A V-type filter typically includes two or more pairs of pleated filter elements arranged in a V-configuration.

The access port is preferably integrated in a wall of the casing through which the air stream is accessible when the air filter is mounted in a filter holding structure, either upstream or downstream of the filter element. Placement of the access port may be selected depending on the intended use of the filter, i.e. how the filter is to be arranged during use. For example, in a prefilter intended to be coupled to a main filter, an access port may be arranged downstream of the filter element in order to access the air stream passing between the prefilter and the main filter. For the same reason, in the main filter, an access port may be arranged upstream of the filter element.

Thus, in some embodiments at least one sealed access port is integrated in the filter casing between the first opening and the at least one filter element.

In some embodiments at least one sealed access port is integrated in the filter casing between the second opening and the at least one filter element.

The air filter may also comprise more than one sealed access port. The air filter may for example comprise 2-30, or more preferably 2-10 sealed access ports. In some embodiments, the air filter comprises more than one sealed access port integrated in the filter casing between the first opening and the at least one filter element. In some embodiments, the air filter comprises more than one sealed access port integrated in the filter casing between the second opening and the at least one filter element. In some embodiments, the air filter comprises at least one sealed access port integrated in the filter casing between the first opening and the at least one filter element and at least one sealed access port integrated in the filter casing between the second opening and the at least one filter element. Having more than one sealed access port may be useful for a number of reasons, for example different access ports can be used for different types of testing equipment or filter evaluation probes (e.g. a pressure sensing probe and a moisture sensing probe), different access ports can be designed with different shapes or sizes to accommodate different types of testing equipment or filter evaluation probes, different access ports can be placed in different positions on the filter casing, either to facilitate access to the access ports in different filter holding arrangements or to provide access to different sections of the air passage. The inventive sealed access port integrated in the filter casing allows for each individual air filter to be provided with more than one, and even with a large number of for potential access ports without increasing the overall manufacturing cost, performance, usability, weight or recyclability of the air filter.

When in use, the air filters are typically mounted in a filter holding structure. The filter holding structure may for example comprise a filter housing or filter bank grid, with one or more openings in which the filter(s) are fitted. The filter casing may often comprise a frame surrounding the first or second opening. The frame provides additional rigidity to the casing and may also be used for mounting and sealing the filter to a filter holding structure or for mounting and sealing the filter to another air filter.

In some embodiments, the filter casing comprises a frame surrounding the first or second opening, wherein at least one sealed access port is integrated in said frame.

Where the filter casing comprises a frame surrounding the first or second opening, the at least one sealed access port may advantageously be integrated in said frame. Integrating the access port in the frame is advantageous, since this part of the filter casing is often easily accessible even when the air filter is mounted on a filter holding structure or on another air filter. Furthermore, as the thickness of the frame is typically greater than the thickness of other portions of the casing side wall, the frame may offer greater possibilities for designing the access port such that it is suitable for connecting testing equipment to the filter casing.

The filter casing can be made mainly of plastic or metal. In preferred embodiments, the filter casing, or the different parts that together make up the filter casing are made of plastic. In some embodiments, the casing, or the different parts that together make up the filter casing are formed by injection molding.

In preferred embodiments, at least a portion of said filter casing wherein said at least one sealed access port is integrated is formed from plastic.

In preferred embodiments, at least a portion of said filter casing wherein said at least one sealed access port is integrated is formed by injection molding.

The access port provides an air-tight seal of the filter casing wall until it is unsealed by removing the sealing portion. Thus, the at least one sealed access port is air-tight. The term air-tight as used herein refers to either completely air-tight or substantially air-tight, depending on the overall requirements on the air filter or air filter arrangement in question. Air leakage in connection with the access port during use should be lower than the overall air leakage in the air filter or air filter arrangement and should preferably be negligible.

The at least one sealed access port can be easily unsealed by removing a portion of the casing wall. The removal may be full or partial. Full removal means that the portion of the casing wall is completely separated from the filter casing and partial removal means that the portion of the casing wall is still partially attached to the casing wall, but can be folded or tucked away so as to provide access to the air passage from outside the filter casing. Partial removal may be advantageous when the access port is unsealed when already mounted on a filter holding structure or on another air filter and the air passage cannot be easily accessed to remove the loose sealing portion.

The sealed access port can be unsealed to provide an access to the air passage from outside the filter casing. The seal may be provided by a portion of the casing wall, which can be easily removed, preferably without tools and without leaving debris or waste besides the seal itself. The at least one sealed access port should be easily unsealed without drilling or cutting tools. When the seal is removed the unsealed access port should preferably be suitable for connecting testing equipment to the filter casing.

In some embodiments the at least one sealed access port comprises a weakening line defining a punch-out portion in the filter casing. The term weakening line as used herein refers to a thinner section along which the material will break first. The sealed access port provides an air-tight seal until the seal is removed by pressing the punch-out portion, until the material of the weakening line breaks.

In some embodiments the punch-out portion of the at least one sealed access port is provided with an opening feature, preferably in the form of a knob or a tab that can be bent, twisted or pulled manually by a user to unseal the access port without the use of tools. The opening feature is preferably integrated with the punch-out portion. The opening feature can be provided on the outside or the inside of the filter casing. The opening feature can optionally be provided in a recess in the frame portion to prevent or minimize the risk of the access port being unsealed unintentionally during transport and handling of the filter casing.

The at least one sealed access port may also comprise a blind hole in the filter casing. A blind hole refers to a hole which does not extend through the entire thickness of the filter casing. The bottom of the blind hole forms the seal. The seal should preferably be easily removed, preferably without tools and without leaving debris or waste besides the seal itself. The at least one sealed access port should be easily unsealed without drilling or cutting tools. The blind hole may advantageously be combined with a weakening line defining a punch-out portion in the bottom of the blind hole.

When the seal is removed the unsealed access port should preferably be suitable for connecting testing equipment to the filter casing. Possible solutions for connecting testing equipment that could be integrated in the blind hole include, but are not limited to, threads, snap-connection, interference fit, and other quick-connections, such as a bayonet connection. According to the invention, the at least one sealed access port further comprises one or more connection features integrated in the sealed access port and configured to mate with one or more connection features of a corresponding fitting structure of a testing equipment.

In some embodiments, the at least one sealed access port when unsealed provides an access port configured for providing an air-tight connection to a corresponding fitting structure, for example an access port with a female taper fitting structure configured for providing an air-tight connection to a corresponding male taper fitting structure.

The blind hole may also be designed to provide an air-tight connection to a corresponding fitting structure. The blind hole may for example be provided with a tapering inner diameter or threads designed to provide an air-tight connection to a corresponding fitting structure.

The blind hole may be formed at an outside or inside surface of the filter casing. In preferred embodiments, the blind hole is formed at an outside of the casing. Forming the blind hole at an outside of the casing is advantageous as the seal, formed by the bottom of the blind hole will be less exposed and less likely to be broken accidentally during transport and handling of the filter. Furthermore, forming the blind hole at an outside of the casing is advantageous as the hole, optionally may also be used for attaching a fitting structure, such a fitting structure of a filter evaluation probe or filter evaluation probe connector, to the access port. In some embodiments, the blind hole may be configured for attaching a fitting structure of a filter evaluation probe or filter evaluation probe connector, such that when the corresponding fitting structure or filter evaluation probe or filter evaluation probe connector is attached, e.g. by screwing or by pushing the fitting structure into the blind hole, it both breaks the seal and forms an air-tight connection to the hole. More preferably, the blind hole is configured such that the fitting structure will first form an air-tight connection to the hole and then break the seal. This way a filter evaluation probe or filter evaluation probe connector can be connected to the access port when the filter is still in use, without air leakage to or from the air passage inside of the filter frame.

The shape of the access port when unsealed is preferably circular, however other shapes may also be used, such as square, hexagonal or other polygonal shapes. The access port when unsealed may typically have a diameter or width in the range of 1-30 mm, preferably in the range of 5-20 mm.

In some embodiments, the air filter is a panel filter, a deep pleat box filter, or a V-type filter. The filter element(s) of the air filter typically comprise a pleated filter media.

In some embodiments, the filter element comprises a filter media configured to remove particles, molecules, gases or vapors from the air.

In some embodiments, the air filter is a particle filtration filter which conforms to a filtration class from G4 up to H13 according to the standards EN779 or **EN** 1822 or equivalent other national or international standards.

In some embodiments, the air filter is a molecular filtration filter designed to remove gaseous or vapor contamination.

Panel filters and V-type air filters are provided in a wide variety of sizes. A common type has a substantially square front frame of about 600 x 600 mm. Filter testing and performance monitoring is mainly an issue in larger air filters, e.g. filters for use in buildings or industrial applications. Thus, in some embodiments, the air filter has a width above 200 mm.

The inventive air filter having an access port is intended to be used with suitable testing equipment for testing and monitoring filter performance. Such testing equipment typically comprises a filter evaluation probe for withdrawing or feeding materials or signals from or to the air passage. Examples of such filter evaluation probes include, but are not limited to, a pressure sensing probe, a temperature sensing probe, a moisture sensing probe, a distributor for introducing a test substance into the air passage, a probe for measuring the concentration of particulate matter in the air passage, a probe for measuring the concentration of a gas or vapor species in the air passage, a probe for measuring the velocity of an air stream in the air passage, a probe for measuring electrostatic charge, or a combination thereof. The filter evaluation probe is configured to be connected to the unsealed access port by an air-tight connection. The filter evaluation probe may typically comprise a probe section extending into the filter casing for withdrawing or feeding materials or signals from or to a predetermined position in the air passage.

According to a second aspect of the disclosure, there is provided a kit comprising an air filter as described above with reference to the fist aspect, and at least one filter evaluation probe or filter evaluation probe connector, wherein said filter evaluation probe or filter evaluation probe connector is provided with a fitting structure configured for providing an air-tight connection to the at least one sealed access port when unsealed.

In some embodiments of the kit, the filter evaluation probe is selected from the group consisting of a pressure sensing probe, a temperature sensing probe, a moisture sensing probe, a distributor for introducing a test substance into the air passage, a probe for measuring the concentration of particulate matter in the air passage, a probe for measuring the concentration of a gas or vapor species in the air passage, a probe for measuring the velocity of an air stream in the air passage, and a probe for measuring electrostatic charge.

The filter evaluation probe connector is a connector which facilitates connection of a filter evaluation probe or other sampling equipment to the access port when unsealed. In some embodiments of the kit, the filter evaluation probe connector is a connector configured for providing an air-tight connection between the at least one sealed access port when unsealed, and a filter evaluation probe. The filter evaluation probe connector is preferably provided with a fitting structure configured for providing an air-tight connection to the sealed access port when unsealed and provided with a fitting structure configured for providing an air-tight connection to a filter evaluation probe. The filter evaluation probe may be selected from the group consisting of a pressure sensing probe, a temperature sensing probe, a moisture sensing probe, a distributor for introducing a test substance into the air passage, a probe for measuring the concentration of particulate matter in the air passage, a probe for measuring the concentration of a gas or vapor species in the air passage, a probe for measuring the velocity of an air stream in the air passage, and a probe for measuring electrostatic charge. Different filter evaluation probe connectors for use with different filter evaluation probes can be provided with the kit. Thus, in some embodiments, the kit comprises two or more different filter evaluation probe connectors.

The at least one sealed access port may preferably comprise a blind hole in the filter casing. A blind hole refers to a hole which does not extend through the entire thickness of the filter casing. The bottom of the blind hole forms the seal. The seal should preferably be easily removed, preferably without tools and without leaving debris or waste besides the seal itself. The blind hole may advantageously be combined with a weakening line defining a punch-out portion in the bottom of the blind hole.

In some embodiments, the blind hole is configured for attaching a fitting structure of a filter evaluation probe or filter evaluation probe connector, such that when the corresponding fitting structure or filter evaluation probe or filter evaluation probe connector is attached, e.g. by screwing or by pushing the fitting structure into the blind hole, it both breaks the seal and forms an air-tight connection to the hole. More preferably, the blind hole is configured such that the fitting structure will first form an air-tight connection to the hole and then break the seal. This way a filter evaluation probe or filter evaluation probe connector can be connected to the access port when the filter is still in use, without air leakage to or from the air passage inside of the filter frame.

The inventive air filter and kit are useful for testing or monitoring filter performance in air filter arrangements.

According to a third aspect of the disclosure, there is provided the use of an air filter according to the first aspect or a kit according to the second aspect in an arrangement for filter leakage detection in an air filtration arrangement, wherein said at least one sealed access port is unsealed and used for
i) for introducing a test substance into the air passage, or
ii) sampling air from the air passage and analyzing the air for the presence of a test substance.

Depending on the type of filter to be tested, the test substance may be a well characterized particulate matter, gas or vapor species adapted for being distributed in an air stream upstream of a filter element in order to test the filtration performance of the filter.

The inventive air filter and kit are especially useful for testing or monitoring filter performance in air filter arrangements wherein two or more filters are often arranged in series.

According to a fourth aspect of the disclosure, there is provided an air filter arrangement comprising a first air filter coupled directly to the front of a second air filter such that air to be filtered is passed first through the first air filter and then through the second air filter, wherein at least one of the air filters is an air filter according the first aspect and the at least one sealed access port integrated in the filter casing can be unsealed to provide an access to the air passage between a filter element of the first air filter and a filter element of the second air filter from outside the filter casing.

Various embodiments of the invention will now be described more in detail with reference to the drawings.

### BRIEF DESCRIPTION OF THE DRAWINGS

Referring now to the drawings, which are exemplary embodiments, and wherein:
Fig. 1a is a upstream perspective view of an embodiment of the inventive air filter;
Fig. 1b is a downstream perspective view of an embodiment of the inventive air filter;
Fig. 2a is a perspective view of a side plate of the inventive air filter;
Fig. 2b is a magnified view of the access port;
Fig. 2c is a cross sectional view of the access port;
Fig. 3a-3c are schematic cross sectional views of embodiments of the access port;
Fig. 4a-4d are schematic cross sectional views of embodiments depicting the access port with a fitting structure attached.

### DETAILED DESCRIPTION OF PREFERRED EMBODIMENTS

The air filter will be further described with reference to an embodiment in which the air filter is a panel filter. However, it should be understood that the air filter could be any air filter comprising a filter casing defining an air passage from a first opening to a second opening in the filter casing, at least one filter element arranged in the air passage of the filter casing, such that air passing between the first opening and the second opening must pass through the at least one filter element. The air filter may thus also be for example a deep pleat box filter, or a V-type filter.

The filter element can be of any suitable kind, but typically comprises a sheet of filter media, which has been pleated to an accordion shape in order to increase the effective filtering area of the filter element.

Although the filter of the embodiment shown herein has a pleated filter element, it is contemplated that the filter element could also be comprised of carbon beds or other gas phase filter medium. The filter element may be suitable for at least one of liquid phase, gas phase, particulate or molecular filtration. In some embodiments, the filter element may be a molecular filtration media, such as bed of carbon or other gas phase absorber.

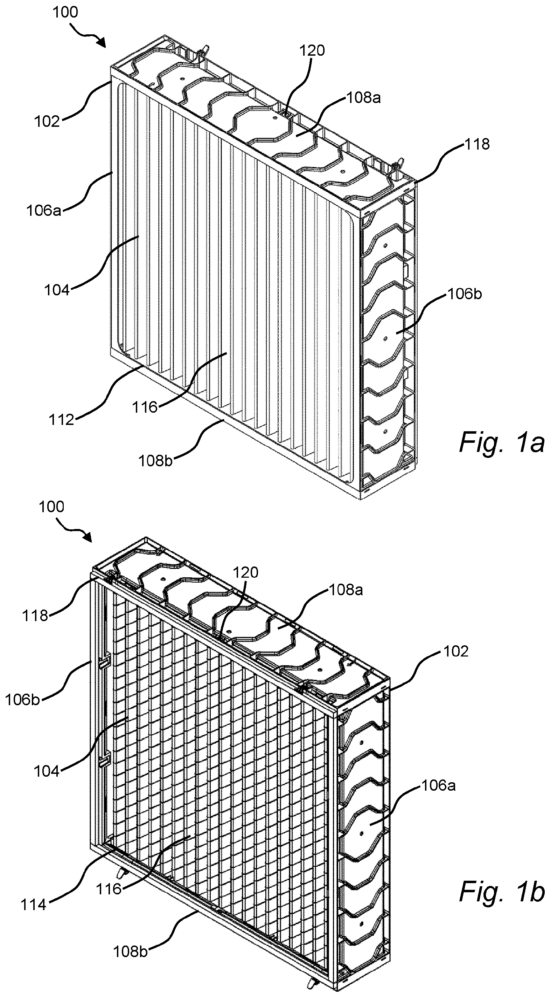

The panel filter 100, shown in Figs. 1a and 1b is a panel filter for use as a prefilter in an air filter arrangement comprising a main air filter and a prefilter coupled directly to the front of the main air filter such that air to be filtered is passed first through the prefilter and then through the main air filter. The panel filter 100 has a rectangular pleated filter element 104 and a rectangular filter casing 102 having the pleated filter element 104 disposed therein. In order to secure the filter element 104 to the casing 102 and prevent air from bypassing the filter element, the filter element is adhered and sealed against the casing by means of an adhesive.

The filter casing 102 includes a first pair of opposing side plates 106a, 106b sealed to the pleated edges of the rectangular pleated filter element and a second pair of opposing side plates 108a, 108b sealed to the non-pleated edges of the rectangular pleated filter element. The rectangular filter casing 102 forms a first opening 112 for receiving an air flow to be filtered and a second opening 114 such that air passing through an air passage 116 from the first opening to the second opening must pass through the filter element. The filter casing comprises a reinforcing frame 118 surrounding the first or second opening. The frame 118, formed by interconnectable reinforcing frame portions in each of the four side plates provides additional rigidity to the casing and may also be used for mounting and sealing the prefilter to a main air filter.

The filter casing 102 has a width of about 600 a height of about 600 mm and a depth of about 120 mm. The filter casing is made of plastic. The side plates 106a, 106b, 108a, 108b, that together make up the filter casing are formed by injection molding. It is understood however, that in alternative embodiments, the filter casing, or the different parts that together make up the filter casing may also be made of metal.

The panel filter 100 further comprises a sealed access port 120. The access port 120 comprises a weakening line 122 defining a punch-out portion 124 in the filter casing. The sealed access port 120 is integrated in the frame portion of the side plate 108a and formed in connection with the injection molding of the side plate. The term weakening line as used herein refers to a thinner section along which the material will break first. The sealed access port provides an air-tight seal until the punch-out portion 124 is removed by pressing the punch-out portion until the material of the weakening line breaks.

The sealed access port can be easily unsealed by removing punch-out portion 124. The removal may be full or partial. Full removal means that the portion of the casing wall is completely separated from the filter casing and partial removal means that the portion of the casing wall is still partially attached to the casing wall, but can be folded or tucked away so as to provide access to the air passage from outside the filter casing. Partial removal may be advantageous when the access port is unsealed when already mounted on a filter holding structure or on another air filter and the air passage cannot be easily accessed to remove the loose sealing portion.

The unsealed access port provides access to the air passage from outside the filter casing and may be used for connecting testing equipment to the filter casing.

The shape of the unsealed access port is circular, however other shapes may also be contemplated, such as square, hexagonal or other polygonal shapes. The access port 120 when unsealed has a diameter of about 12 mm, however other sizes may also be contemplated, such as diameters or widths in the range of 1-30 mm, preferably in the range of 5-20 mm.

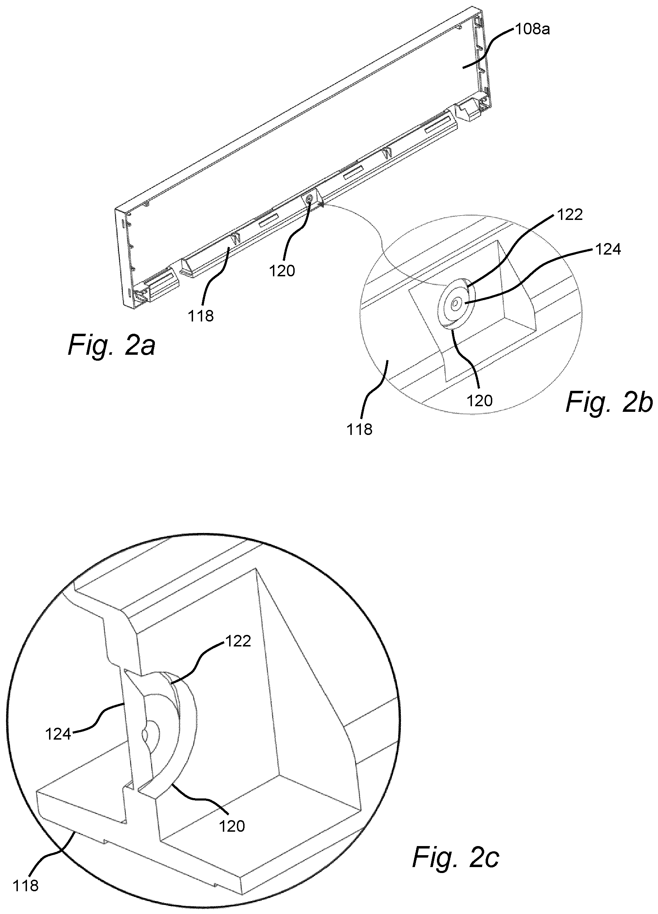

Fig. 2a and Fig. 2b show the placement and design of the sealed access port 120 integrated in the frame portion of the side plate 108a.

Fig. 2c is a cross sectional view of the access port showing the design of the weakening line 122 defining the punch-out portion 124 in the filter casing.

The panel filter may advantageously be used as a prefilter in an air filter arrangement comprising a main air filter and a prefilter coupled directly to the front of the main air filter such that air to be filtered is passed first through the prefilter and then through the main air filter.

In order to analyze the air stream between the filter element of the prefilter and the filter element(s) of the main filter the sealed access port is unsealed by removing punch-out portion and attaching a suitable filter evaluation probe for withdrawing or feeding materials or signals from or to the air passage. Examples of such filter evaluation probes include, but are not limited to, a pressure sensing probe, a temperature sensing probe, a moisture sensing probe, a distributor for introducing a test substance into the air passage, a probe for measuring the concentration of particulate matter in the air passage, a probe for measuring the concentration of a gas or vapor species in the air passage, a probe for measuring the velocity of an air stream in the air passage, a probe for measuring electrostatic charge, or a combination thereof. The filter evaluation probe is configured to be connected to the unsealed access port by an air-tight connection. The filter evaluation probe may typically comprise a probe section extending into the filter casing for withdrawing or feeding materials or signals from or to a predetermined position in the air passage.

The inventive sealed access port integrated in the filter casing allows for each individual air filter to be prepared for being equipped with testing equipment, without increasing the overall manufacturing costs of the air filter. **If** the access port is not needed, it is simply left sealed. The filter can then be used as normal, without any negative effects in terms of cost, performance, usability, weight or recyclability.

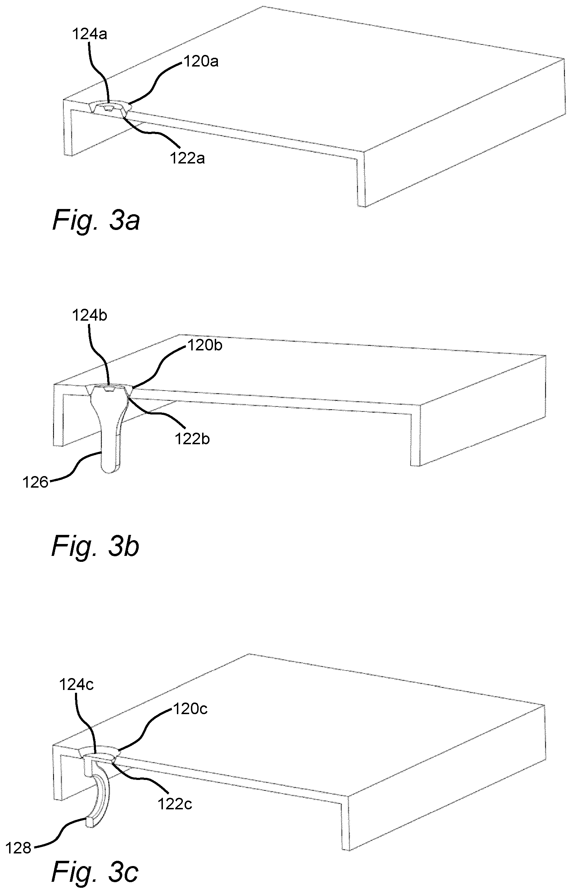

Fig. 3a schematically shows a sealed access port 120a integrated in a frame portion. The sealed access port 120a has a weakening line 122a defining a punch-out portion 124a.

The sealed access port may optionally be provided with an opening feature which facilitates unsealing of the access port without the use of tools.

Fig. 3b schematically shows a sealed access port 120b integrated in a frame portion of a filter casing. The sealed access port 120b has a weakening line 122b defining a punch-out portion 124b. The punch-out portion 124b is provided with an opening feature in the form of a knob 126. The knob 126 can bent or twisted manually by a user to unseal the access port without the use of tools. The knob can be provided on the outside or the inside of the filter casing. The knob can optionally be provided in a recess in the frame portion to prevent or minimize the risk of the access port being unsealed unintentionally during transport and handling of the filter casing.

Fig. 3c schematically shows a sealed access port 120c integrated in a frame portion of a filter casing. The sealed access port 120c has a weakening line 122c defining a punch-out portion 124c. The punch-out portion 124c is provided with an opening feature in the form of a tab 128. The tab 128 can be pulled manually by a user to unseal the access port without the use of tools. The tab can be provided on the outside or the inside of the filter casing. The tab can optionally be provided in a recess in the frame portion to prevent or minimize the risk of the access port being unsealed unintentionally during transport and handling of the filter casing.

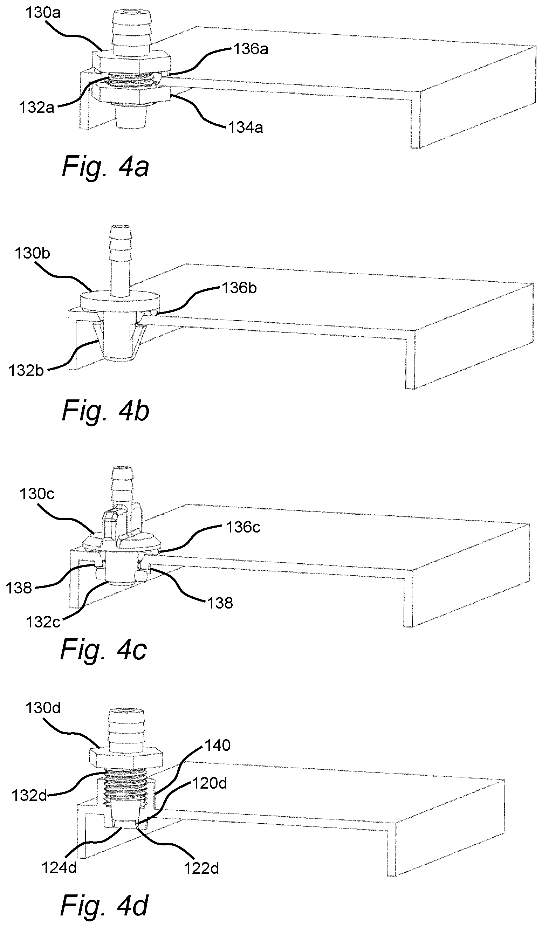

Figs. 4a-4d schematically show how a fitting structure or a filter evaluation probe can be attached to the access port when it is unsealed.

Fig. 4a shows one way of attaching a fitting structure to the access port as shown, e.g., in Figs 3a-c when unsealed. The unsealed access port forms a hole in the frame portion and the fitting structure 130a, having a threaded portion 132a, is attached using a nut 134a, and sealed by a gasket 136a.

Fig. 4b shows another way of attaching a fitting structure to the access port as shown, e.g., in Figs 3a-c when unsealed. The unsealed access port forms a hole in the frame portion. The fitting structure 130b having a barbed portion 132b suitably dimensioned in relation of the diameter and depth of the hole.is attached to the access port and sealed by a gasket 136b by pushing the barbed portion 130b of the fitting structure through the hole until the barbs snap out and lock the fitting structure in position.

Fig. 4c shows another way of attaching a fitting structure to an access port when unsealed. The unsealed access port forms a hole in the frame portion. The access port is provided with a bayonet type locking feature 138 configured to mate with a corresponding bayonet type locking feature provided on a portion 132c of the fitting structure 130c. The fitting structure 130c suitably dimensioned in relation of the diameter and depth of the hole is attached to the access port and sealed by a gasket 136c by pushing the portion 132c provided with the bayonet type locking feature through the hole and then twisting the fitting structure 130c until the bayonet type locking features engage to seal and lock the fitting structure in position.

Fig. 4d shows an embodiment of a sealed access port integrated in a frame portion of a filter casing. The sealed access port 120d has a weakening line 122d defining a punch-out portion 124d. The sealed access port is further provided with a threaded header 140 integrated in the frame portion. A fitting structure 130d having a threaded portion 132d can be attached to the access port by screwing the threaded portion 132d of the fitting structure into the threaded header 140. The fitting structure 130d may also be used for unsealing the access port if the dimensions of the access port and fitting structure are selected such that when the fitting structure is screwed into the threaded header, an end portion of the fitting structure will push out the punch-out portion 124d to unseal the access port. The connection between the fitting structure and the access port is sealed by an interference fit formed by the tapered surfaces of the end portion of the fitting structure 130d and the inside wall of the access port 120d respectively.

While the invention has been described herein with reference to various exemplary embodiments, it will be understood by those skilled in the art that various changes may be made, and equivalents may be substituted for elements thereof, without departing from the scope of the invention. In addition, many modifications may be made to adapt a particular situation or feature to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims. Furthermore, it would be understood by the person skilled in the art what features of the different embodiments can be combined although not explicitly written above.

## Claims

1. A kit comprising an air filter (100) and at least one filter evaluation probe or filter evaluation probe connector, wherein the air filter (100) comprises
a filter casing (102) defining an air passage (116) from a first opening (112) to a second opening (114) in the filter casing,
at least one filter element (104) arranged in the air passage of the filter casing, such that air passing between the first opening and the second opening must pass through the at least one filter element,
wherein said filter casing is manufactured with at least one sealed access port (120) integrated in the filter casing, wherein at least one sealed access port (120) is integrated in the filter casing (102) between the second opening (114) and the at least one filter element (104), and wherein the seal is provided by a portion of a casing wall, and wherein said at least one sealed access port can be unsealed to provide an access to the air passage from outside the filter casing, and to be used for connecting the at least one filter evaluation probe or filter evaluation probe connector to the filter casing (102), wherein one or more connection features are integrated in the sealed access port (120) and configured to mate with one or more connection features of a corresponding fitting structure of the at least one filter evaluation probe or filter evaluation probe connector configured to provide an air-tight connection to the at least one sealed access port (120) when unsealed.

2. A kit according to claim 1, wherein the filter evaluation probe is selected from the group consisting of a pressure sensing probe, a temperature sensing probe, a moisture sensing probe, a distributor for introducing a test substance into the air passage, a probe for measuring the concentration of particulate matter in the air passage, a probe for measuring the concentration of a gas or vapor species in the air passage, a probe for measuring the velocity of an air stream in the air passage, and a probe for measuring electrostatic charge.

3. A kit according to claim 1 or 2, wherein at least one sealed access port (120) is integrated in the filter casing (102) between the first opening (112) and the at least one filter element (104).

4. A kit according to any one of the preceding claims, wherein said connection features comprise one or more of the following:
a) a female taper fitting structure configured for providing an air-tight connection to a corresponding male taper fitting structure,
b) threads designed to provide an air-tight connection to a corresponding fitting structure,
c) a bayonet type locking feature configured to mate with a corresponding bayonet type locking feature provided on a fitting structure.

5. A kit according to any one of the preceding claims, wherein said air filter (100) is a panel filter, a deep pleat box filter, or a V-type filter, and wherein said at least one filter element (104) comprises a pleated filter media.

6. A kit according to any one of the preceding claims, wherein said filter casing (102) comprises a reinforcing frame (118) surrounding the first (112) or second opening (114) and wherein at least one sealed access port (120) is integrated in said frame.

7. A kit according to any one of the preceding claims, wherein said filter casing (102) wherein said at least one sealed access port (120) is integrated is formed from plastic.

8. A kit according to any one of the preceding claims, wherein said filter casing (102) wherein said at least one sealed access port (120) is integrated is formed by injection molding.

9. A kit according to any one of the preceding claims, wherein said at least one sealed access port (120) is air-tight, and wherein said at least one sealed access port (120) can be easily unsealed by removing a portion of the casing wall.

10. A kit according to any one of the preceding claims, wherein said at least one sealed access port (120) comprises a weakening line (122) defining a punch-out portion (124) in the filter casing (102), and/or said at least one sealed access port (120) comprises a blind hole in the filter casing.

11. A kit according to any one of the preceding claims, wherein said air filter (100) is a particle filtration filter which conforms to a filtration class from G4 up to H13 according to the standards EN779 or EN 1822 or equivalent other national or international standards.

12. A kit according to any one of the preceding claims, wherein said air filter (100) is a molecular filtration filter designed to remove gaseous or vapor contamination.

13. A kit according to any one of the preceding claims, wherein said air filter (100) has a width above 200 mm.

14. Use of a kit according to any one of the preceding claims in an arrangement for filter leakage detection in an air filtration arrangement, wherein said at least one sealed access port (120) is unsealed and used for
i) for introducing a test substance into the air passage, or
ii) sampling air from the air passage and analyzing the air for the presence of a test substance.

## Patentansprüche

1. Kit, umfassend ein Luftfilter (100) und mindestens eine Filterauswertungssonde oder einen Filterauswertungssondenverbinder, wobei das Luftfilter (100) Folgendes umfasst:
ein Filtergehäuse (102), das einen Luftkanal (116) von einer ersten Öffnung (112) zu einer zweiten Öffnung (114) in dem Filtergehäuse definiert,
mindestens ein Filterelement (104), das in dem Luftkanal des Filtergehäuses derart angeordnet ist, dass Luft, die zwischen der ersten Öffnung und der zweiten Öffnung fließt, durch das mindestens eine Filterelement fließen muss,
wobei das Filtergehäuse mit mindestens einem abgedichteten Zugangsport (120) hergestellt ist, der in das Filtergehäuse integriert ist, wobei mindestens ein abgedichteter Zugangsport (120) zwischen der zweiten Öffnung (114) und dem mindestens einen Filterelement (104) in das Filtergehäuse (102) integriert ist und wobei die Abdichtung durch einen Abschnitt einer Gehäusewand bereitgestellt wird und wobei der mindestens eine abgedichtete Zugangsport geöffnet werden kann, um einen Zugang zu dem Luftkanal von außerhalb des Filtergehäuses bereitzustellen und zum Verbinden der mindestes einen Filterauswertungssonde oder des mindestens einen Filterauswertungssondenverbinders mit dem Filtergehäuse (102) verwendet zu werden, wobei ein oder mehrere Verbindungsmerkmale in den abgedichteten Zugangsport (120) integriert und dazu konfiguriert sind, mit einem oder mehreren Verbindungsmerkmalen einer entsprechenden Befestigungsstruktur der mindestens einen Filterauswertungssonde oder des mindestens einen Filterauswertungssondenverbinders zusammenzupassen, die/der dazu konfiguriert ist, eine luftdichte Verbindung mit dem mindestens einen abgedichteten Zugangsport (120) bereitzustellen, wenn dieser sich im geöffneten Zustand befindet.

2. Kit nach Anspruch 1, wobei die Filterauswertungssonde ausgewählt ist aus der Gruppe bestehend aus einer Druckerfassungssonde, einer Temperaturerfassungssonde, einer Feuchtigkeitserfassungssonde, einem Verteiler zum Einbringen einer Testsubstanz in den Luftkanal, einer Sonde zum Messen der Konzentration von Feststoffteilchen in dem Luftkanal, einer Sonde zum Messen der Konzentration einer Gas- oder Dampfspezies in dem Luftkanal, einer Sonde zum Messen der Geschwindigkeit eines Luftstroms in dem Luftkanal und einer Sonde zum Messen der elektrostatischen Ladung.

3. Kit nach Anspruch 1 oder 2, wobei mindestens ein abgedichteter Zugangsport (120) zwischen der ersten Öffnung (112) und dem mindestens einen Filterelement (104) in das Filtergehäuse (102) integriert ist.

4. Kit nach einem der vorhergehenden Ansprüche, wobei die Verbindungsmerkmale eines oder mehrere von Folgendem umfassen:
a) einer Innenkegel-Befestigungsstruktur, die zum Bereitstellen einer luftdichten Verbindung mit einer entsprechenden Außenkegel-Befestigungsstruktur konfiguriert ist,
b) Gewinden, die dazu ausgestaltet sind, eine luftdichte Verbindung mit einer entsprechenden Befestigungsstruktur bereitzustellen,
c) einem bajonettartigen Verriegelungsmerkmal, das dazu konfiguriert ist, mit einem entsprechenden bajonettartigen Verriegelungsmerkmal, das an der Befestigungsstruktur bereitgestellt ist, zusammenzupassen.

5. Kit nach einem der vorhergehenden Ansprüche, wobei das Luftfilter (100) ein Flächenfilter, ein Kastenfilter mit tiefen Falten oder ein V-artiges Filter ist und wobei das mindestens eine Filterelement (104) ein gefaltetes Filtermedium umfasst.

6. Kit nach einem der vorhergehenden Ansprüche, wobei das Filtergehäuse (102) einen Verstärkungsrahmen (118) umfasst, der die erste (112) oder die zweite Öffnung (114) umgibt, und wobei mindestens ein abgedichteter Zugangsport (120) in den Rahmen integriert ist.

7. Kit nach einem der vorhergehenden Ansprüche, wobei das Filtergehäuse (102), in das der mindestens eine abgedichtete Zugangsport (120) integriert ist, aus Kunststoff ausgebildet ist.

8. Kit nach einem der vorhergehenden Ansprüche, wobei das Filtergehäuse (102), in das der mindestens eine abgedichtete Zugangsport (120) integriert ist, durch Spritzgießen ausgebildet ist.

9. Kit nach einem der vorhergehenden Ansprüche, wobei der mindestens eine abgedichtete Zugangsport (120) luftdicht ist und wobei der mindestens eine abgedichtete Zugangsport (120) leicht geöffnet werden kann, indem ein Abschnitt der Gehäusewand entfernt wird.

10. Kit nach einem der vorhergehenden Ansprüche, wobei der mindestens eine abgedichtete Zugangsport (120) eine Schwächungslinie (122) umfasst, die einen Ausstanzabschnitt (124) in dem Filtergehäuse (102) definiert, und/oder der mindestens eine abgedichtete Zugangsport (120) ein Sackloch in dem Filtergehäuse umfasst.

11. Kit nach einem der vorhergehenden Ansprüche, wobei das Luftfilter (100) ein Partikelfiltrationsfilter ist, das einer Filtrationsklasse von G4 bis H13 gemäß den Normen EN779 oder EN 1822 oder äquivalenten anderen nationalen oder internationalen Normen entspricht.

12. Kit nach einem der vorhergehenden Ansprüche, wobei das Luftfilter (100) ein Molekularfiltrationsfilter ist, das dazu ausgestaltet ist, Gas- oder Dampfverunreinigungen zu entfernen.

13. Kit nach einem der vorhergehenden Ansprüche, wobei das Luftfilter (100) eine Breite von mehr als 200 mm aufweist.

14. Verwendung eines Kits nach einem der vorhergehenden Ansprüche in einer Anordnung zur Filterleckagedetektion in einer Luftfiltrationsanordnung, wobei der mindestens eine abgedichtete Zugangsport (120) geöffnet und für mindestens eines von Folgendem verwendet wird:
i) Einbringen einer Testsubstanz in den Luftkanal oder
ii) Entnehmen einer Luftprobe aus dem Luftkanal und Analysieren der Luft auf das Vorhandensein einer Testsubstanz.

## Revendications

1. Kit comprenant un filtre à air (100) et au moins une sonde d'évaluation de filtre ou un raccord de sonde d'évaluation de filtre, dans lequel le filtre à air (100) comprend :
un boîtier de filtre (102) définissant un passage d'air (116) provenant d'une première ouverture (112) jusqu'à une seconde ouverture (114) dans le boîtier de filtre ;
au moins un élément filtrant (104) disposé dans le passage d'air du boîtier de filtre, de sorte que l'air passant entre la première ouverture et la seconde ouverture doit passer à travers l'au moins un élément filtrant,
dans lequel ledit boîtier de filtre est fabriqué avec au moins un orifice d'accès scellé (120) intégré dans le boîtier de filtre, dans lequel au moins un orifice d'accès scellé (120) est intégré dans le boîtier de filtre (102) entre la seconde ouverture (114) et l'au moins un élément filtrant (104), et dans lequel le scellement est assuré par une partie d'une paroi de boîtier, et dans lequel ledit au moins un orifice d'accès scellé peut être descellé pour fournir un accès au passage d'air depuis l'extérieur du boîtier de filtre, et pour être utilisé pour raccorder l'au moins une sonde d'évaluation de filtre ou le raccord de sonde d'évaluation de filtre au boîtier de filtre (102), dans lequel une ou plusieurs caractéristiques de raccordement sont intégrées dans l'orifice d'accès scellé (120) et configurées pour s'accoupler avec une ou plusieurs caractéristiques de raccordement d'une structure d'ajustement correspondante de l'au moins une sonde d'évaluation de filtre ou du raccord de sonde d'évaluation de filtre configurée pour assurer un raccordement étanche à l'air à l'au moins un orifice d'accès scellé (120) lorsqu'il est descellé.

2. Kit selon la revendication 1, dans lequel la sonde d'évaluation de filtre est choisie dans le groupe constitué par une sonde de détection de pression, une sonde de détection de température, une sonde de détection d'humidité, un distributeur pour introduire une substance d'essai dans le passage d'air, une sonde pour mesurer la concentration de matières particulaires dans le passage d'air, une sonde pour mesurer la concentration d'une espèce gazeuse ou de vapeur dans le passage d'air, une sonde pour mesurer la vitesse d'un flux d'air dans le passage d'air, et une sonde pour mesurer une charge électrostatique.

3. Kit selon la revendication 1 ou 2, dans lequel au moins un orifice d'accès scellé (120) est intégré dans le boîtier de filtre (102) entre la première ouverture (112) et l'au moins un élément filtrant (104).

4. Kit selon l'une quelconque des revendications précédentes, dans lequel lesdites caractéristiques de raccordement comprennent une ou plusieurs des caractéristiques suivantes :
a) une structure d'ajustement à cône femelle configurée pour assurer un raccordement étanche à l'air à une structure d'ajustement à cône mâle correspondante,
b) des filetages conçus pour assurer un raccordement étanche à l'air à une structure d'ajustement correspondante,
c) une caractéristique de verrouillage de type baïonnette configurée pour s'accoupler avec une caractéristique de verrouillage de type baïonnette correspondante prévue sur une structure d'ajustement.

5. Kit selon l'une quelconque des revendications précédentes, dans lequel ledit filtre à air (100) est un filtre à panneau, un filtre à boîte à plis profonds, ou un filtre de type en V, et dans lequel ledit au moins un élément filtrant (104) comprend un média filtrant plissé.

6. Kit selon l'une quelconque des revendications précédentes, dans lequel ledit boîtier de filtre (102) comprend un cadre de renforcement (118) entourant la première (112) ou la seconde ouverture (114) et dans lequel au moins un orifice d'accès scellé (120) est intégré dans ledit cadre.

7. Kit selon l'une quelconque des revendications précédentes, dans lequel ledit boîtier de filtre (102) dans lequel est intégré ledit au moins un orifice d'accès scellé (120) est formé à partir de matière plastique.

8. Kit selon l'une quelconque des revendications précédentes, dans lequel ledit boîtier de filtre (102) dans lequel est intégré ledit au moins un orifice d'accès scellé (120) est formé par moulage par injection.

9. Kit selon l'une quelconque des revendications précédentes, dans lequel ledit au moins un orifice d'accès scellé (120) est étanche à l'air, et dans lequel ledit au moins un orifice d'accès scellé (120) peut être facilement descellé par retrait d'une partie de la paroi de boîtier.

10. Kit selon l'une quelconque des revendications précédentes, dans lequel ledit au moins un orifice d'accès scellé (120) comprend une ligne d'affaiblissement (122) définissant une partie défonçable (124) dans le boîtier de filtre (102), et/ou ledit au moins un orifice d'accès scellé (120) comprend un trou borgne dans le boîtier de filtre.

11. Kit selon l'une quelconque des revendications précédentes, dans lequel ledit filtre à air (100) est un filtre de filtration de particules qui est conforme à une classe de filtration allant de G4 jusqu'à H13 selon les normes EN779 ou EN 1822 ou d'autres normes nationales ou internationales équivalentes.

12. Kit selon l'une quelconque des revendications précédentes, dans lequel ledit filtre à air (100) est un filtre de filtration moléculaire conçu pour éliminer une contamination gazeuse ou de vapeur.

13. Kit selon l'une quelconque des revendications précédentes, dans lequel ledit filtre à air (100) présente une largeur supérieure à 200 mm.

14. Utilisation d'un kit selon l'une quelconque des revendications précédentes dans un agencement pour la détection de fuite de filtre dans un agencement de filtration d'air, dans laquelle ledit au moins un orifice d'accès scellé (120) est descellé et utilisé pour :
i) introduire une substance d'essai dans le passage d'air, ou
ii) échantillonner de l'air provenant du passage d'air et analyser l'air pour détecter la présence d'une substance d'essai.
